# EUROPÄISCHE PATENTSCHRIFT

(11) **EP 0 922 893 B1**
(45) Veröffentlichungstag und Bekanntmachung des Hinweises auf die Patenterteilung: **09.07.2003**
(21) Anmeldenummer: 98115211.9
(22) Anmeldetag: 13.08.1998
(51) Int. Cl.: F16K 31/02

(54) **Ventil**
Valve
Soupape

(30) Priorität: 13.12.1997 DE 29722085 U
(43) Veröffentlichungstag der Anmeldung: 16.06.1999
(73) Patentinhaber: Festo AG & Co, 73734 Esslingen (DE)
(72) Erfinder: Stoll, Kurt, Dr., 72732 Esslingen (DE); Maichl, Martin, 73084 Salach (DE); Vollmer, Herbert, Dr., 73274 Notzingen (DE)
(74) Vertreter: Abel, Martin, Dipl.-Ing.

(56) Entgegenhaltungen:
- WO-A-96/26378
- DE-A- 1 908 136
- DE-A- 3 608 550
- DE-U- 1 977 658
- DE-U- 29 611 808
- US-A- 4 828 220

## Beschreibung

Die Erfindung betrifft ein Ventil, mit einem in einem Ventilgehäuse angeordneten Schaltelement, das mittels einer Betätigungseinrichtung zwischen wenigstens zwei Schaltstellungen umschaltbar ist, in denen das Schaltelement durch eine von der Betätigungseinrichtung aufbringbare Haltekraft gehalten werden kann.

Ein derartiges Ventil geht beispielsweise aus dem deutschen Gebrauchsmuster 29 611 808 hervor. Das Schaltelement ist dort blattfederähnlich ausgebildet und in den beiden möglichen Schaltstellungen bezüglich einer zwischen den beiden Schaltstellungen befindlichen Neutrallage in entgegengesetzte Richtungen gewölbt. Die Betätigungseinrichtung ist von einem Aktor gebildet, der durch Aufbringen einer Zugkraft das Schaltelement aus einer Schaltstellung in die Neutrallage bewegen kann, in der es vollständig gestreckt und nicht gewölbt ist. Aufgrund der beim Bewegen des Schaltelementes in der Neutrallage vorhandenen kinetischen Energie, bewegt sich das Schaltelement durch die Neutrallage hindurch in Richtung der jeweils anderen Schaltstellung. Das bedeutet, daß die Betätigungseinrichtung die zum Umschalten auf das Schaltelement bewirkte Zugkraft in dem Moment aufheben muß, in dem sich das Schaltelement durch die Neutrallage hindurchbewegt. Anderenfalls würde das Schaltelement in seiner Umschaltbewegung gestoppt werden und ein sicheres Umschalten in die gewünschte Schaltstellung wäre nicht gewährleistet. Dies führt jedoch dazu, daß die Betätigungseinrichtung sehr exakt und schnell betätigt werden muß, um den Umschaltvorgang sicher durchzuführen, was sehr schwierig und aufwendig ist.

Desweiteren geht auch aus der DE 36 08 550 A1 ein Ventil der eingangs genannten Art hervor, bei dem die Betätigungseinrichtung von einer Piezokristall-Anordnung gebildet ist. Hierbei können nur begrenzte Schaltwege realisiert werden.

Aus der DE-U-1 977 658 ist ein Ventil bekannt, bei dem das Schaltelement ohne Zuführung zusätzlicher Energie von außen allein durch eine Feder in einer ersten Schaltstellung gehalten wird. Um das Schaltelement in eine zweite Schaltstellung umzuschalten, werden gleichzeitig zwei Magnetsysteme erregt, von denen eines so stark ausgelegt ist, daß das Schaltelement in die zweite Schaltstellung gelangt. Nach Erreichen der zweiten Schaltstellung wird dieses Magnetsystem abgeschaltet und das Schaltelement ausschließlich von dem weiterhin aktivierten Magnetsystem gehalten. Wird anschießend auch dieses Magnetsystem deaktiviert, bewegt sich das Schaltglied durch die Kraft der Feder in die erste Schaltstellung zurück.

Es ist daher die Aufgabe der vorliegenden Erfindung, ein Ventil zu schaffen, das ein sicheres Umschalten bei großen Schaltwagen gewährleistet und in den Schaltstellungen eine große Haltekraft hervorrufen kann.

Diese Aufgabe wird erfindungsgemäß dadurch gelöst, daß die Betätigungseinrichtung wenigstens zwei aktiv betätigbare Antriebseinheiten aufweist, die jeweils zwischen mehreren Betriebszuständen umschaltbar sind und von denen eine erste Antriebseinheit maßgeblich für die Erzeugung der Haltekraft in den beiden Schaltstellungen und eine zweite Antriebseinheit maßgeblich für das Hervorrufen der Umschaltkraft verantwortlich ist, wobei die erste Antriebseinheit in einem nicht aktivierten ersten Betriebszustand in beiden Schaltstellungen ohne Zuführung zusätzlicher Energie von außen die auf das Schaltelement einwirkende Haltekraft aufbringt und in einem durch Energiezufuhr von außen aktivierten zweiten Betriebszustand einen Umschaltzustand des Schaltelements hervorruft, in dem die Haltekraft zumindest teilweise aufgehoben ist, und wobei die zweite Antriebseinheit aus einem Ausgangszustand in einen Umschalt-Betriebszustand umschaltbar ist, in dem dem im Umschaltzustand befindlichen Schaltelement eine in der gewünschten Umschaltrichtung wirksame und ein Umschalten in Richtung der gewünschten Schaltstellung hervorrufende Umschaltkraft auferlegt wird.

Dadurch, daß die Betätigungseinrichtung mehrere aktiv betätigbare Antriebseinheiten enthält, können mehrere Antriebsprinzipien miteinander kombiniert werden, so daß ein Ventil realisiert werden kann, dessen Schaltelement einfach und sicher zwischen den Schaltstellungen umschaltbar ist, wobei gleichzeitig große Haltekräfte und lange Schaltwege realisierbar sind. Die Antriebseinheiten sind hinsichtlich unterschiedlicher Hauptfunktionen ausgelegt, so daß die erste Antriebseinheit maßgeblich für das Aufbringen der Haltekraft und die zweite Antriebseinheit maßgeblich für die Vorgabe der Umschaltrichtung verantwortlich ist. Indem der erste Betriebszustand der ersten Antriebseinheit den unbetätigten, nicht aktivierten Zustand und der zweite Betriebszustand einen betätigten, aktivierten Zustand darstellt, muß der ersten Antriebseinheit lediglich zum Umschalten des Schaltelementes von außen Energie zugeführt werden, wohingegen zum Aufbringen der auf das Schaltelement in einer Schaltstellung einwirkenden Haltekraft keine zusätzliche Energie von außen aufgewendet werden muß. Auch bei einem unerwünschten Energieausfall wird somit die vorhandene Schaltstellung beibehalten.

Vorteilhafte Weiterbildungen des Gegenstandes der Erfindung gehen aus den Unteransprüchen hervor.

Zweckmäßigerweise stellt mindestens eine Schaltstellung eine Schließstellung dar, in der das Schaltelement einen in das Gehäuseinnere des Ventilgehäuses einmündenden Fluidkanal fluiddicht verschließt. Somit kann beispielsweise ein Wegeventil realisiert werden. Alternativ hierzu könnte das Schaltelement den Fluidkanal auch nur teilweise verschließen, so daß es eine Drosselstellung einnehmen würde.

Es ist desweiteren zweckmäßig, wenn wenigstens eine und insbesondere die erste Antriebseinheit eine an eine Spannung anlegbare und von dieser Spannung abtrennbare Piezoelementanordnung aufweist, die sich beim Anlegen der Spannung in einer Verformungsrichtung ausdehnt und beim Abtrennen der Spannung wieder zusammenzieht, oder umgekehrt, so daß durch Anlegen und Abtrennen der Spannung die Antriebseinheit zwischen zwei Betriebszuständen umschaltbar ist. Mit Hilfe der Piezoelementanordnung können im zweiten Betriebszustand der ersten Antriebseinheit große Haltekräfte zumindest teilweise aufgehoben werden. Hierbei ist es insbesondere zweckmäßig, wenn sich die erste Antriebseinheit bei an die Piezoelementanordnung angelegter Spannung im zweiten und bei abgetrennter Spannung im ersten Betriebszustand befindet. Somit ist lediglich während des Umschaltvorganges eine Energiezufuhr von außen notwendig, wobei der Umschaltvorgang sehr kurz ist, so daß der Energieverbrauch insgesamt gering ist.

Dazuhin ist es vorteilhaft, wenn durch die erste Antriebseinheit der Abstand der beiden Endbereiche des Schaltelementes vorgebbar ist. Bei einer Piezoelementanordnung ist hierbei das Schaltelement zweckmäßigerweise zumindest mit einem seiner beiden in Verformungsrichtung der Piezoelementanordnung weisenden Endbereiche mit der Piezoelementanordnung bewegungsgekoppelt. Aufgrund der Verformung der Piezoelementanordnung in Verformungsrichtung wird die auf das Schaltelement ausgeübte Haltekraft reduziert oder aufgehoben und es kann eine das Schaltelement in Umschaltrichtung beaufschlagende Kraft hervorgerufen werden.

Bei einer weiteren Ausführungsform kann die erste Antriebseinheit zum Aufbringen der Haltekraft über eine federelastische Einrichtung verfügen, die insbesondere von einer Druckfedereinrichtung gebildet ist. Auf diese Weise wird die Haltekraft ohne zusätzliche Energie von außen erzeugt.

Weiterhin ist es vorteilhaft, wenn die federelastische Einrichtung die Piezoelementanordnung in Verformungsrichtung drückend beaufschlagt. Hierdurch kann die Lebensdauer der Piezoelementanordnung vergrößert werden.

Außerdem ist es zweckmäßig, wenn das Schaltelement zumindest unter Einwirkung der Haltekraft in den Schaltstellungen eine in Umschaltrichtung ausgebauchte Form aufweist. Hierbei kann es blattfeder- oder membranähnlich und in Umschaltrichtung biegeelastisch ausgeführt sein. Durch die Erzeugung eines entsprechend in Umschaltrichtung gewölbten Verlaufes des Schaltelementes läßt sich das Schaltelement in eine zugeordnete Schaltstellung bringen.

Vorteilhaft ist es ebenfalls, wenn wenigstens eine Antriebseinheit und insbesondere die zweite Antriebseinheit kontaktlos mit dem Schaltelement zusammenarbeitet. Aufgrund dieser Maßnahme ist ein besonders verschleißarmes Umschalten des Schaltelementes möglich, was eine erhöhte Lebensdauer des Ventils mit sich bringt. Beispielsweise kann wenigstens eine Antriebseinheit und insbesondere die zweite Antriebseinheit von einem Magnetantrieb gebildet sein, der eine Magnetanordnung aufweist, die ein Magnetfeld hervorruft, das zur Erzeugung einer auf das Schaltelement einwirkenden Kraft dient. Mit Hilfe eines Magnetantriebes ist ein sicheres Umschalten bei gleichzeitig großen Schaltwegen realisierbar.

Eine Ausgestaltung des Ventils in mikrotechnologischem Aufbau kann aufgrund der sehr geringen Abmessungen vorteilhaft sein. Bei der Herstellung eines solchen Ventils, das auch als Mikro-Ventil bezeichnet werden könnte, kommen häufig Ätzverfahren zum Einsatz.

Im folgenden wird der Gegenstand der Erfindung anhand der beigefügten Zeichnung näher erläutert. Es zeigen:
- Figur 1: ein Ausführungsbeispiel des erfindungsgemäßen Ventils in einer schematischen Längsschnittdarstellung quer zur Umschaltrichtung gemäß Schnittlinie I-I aus Figur 2,
- Figur 2: das Ausführungsbeispiel nach Figur 1 in einer in Längsrichtung des Ventils geschnittenen schematischen Darstellung gemäß der Schnittlinie II-II in Figur 1 und
- Figur 3: das Ausführungsbeispiel nach den Figuren 1 und 2 in einer quer zur Verformungsrichtung der Piezoelementanordnung geschnittenen schematischen Darstellung gemäß der Schnittlinie III-III in Figur 2.

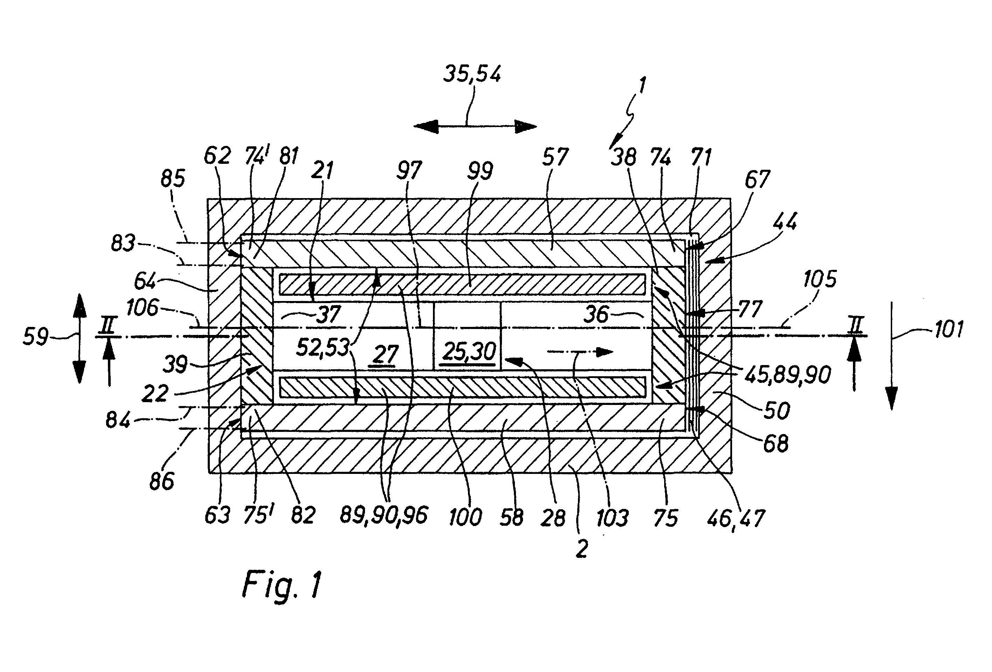

In den Figuren 1 bis 3 ist ein Ausführungsbeispiel eines erfindungsgemäßen Ventils 1 in verschiedenen, schematischen Schnittdarstellungen gezeigt. Das Ventil 1 verfügt über ein beispielsgemäß quaderförmig konturiertes Ventilgehäuse 2, das in einer alternativen Ausführungsform auch eine beliebige andere Gestalt besitzen könnte.

Das Ventil 1 ist in der vorliegenden Ausführung als 3/2-Wegeventil ausgestaltet, wobei drei Fluidkanäle 3,4,5 in das Gehäuseinnere des Ventilgehäuses 2 einmünden. Die Fluidkanäle 3,4,5 besitzen jeweils eine dem Gehäuseinneren des Ventilgehäuses 2 zugewandte innere Mündungsöffnung 6,7,8 und auf der jeweils entgegengesetzten Seite des Fluidkanals 3,4,5 eine von außen zugängliche äußere Mündungsöffnung 9,10,11.

Im Bereich der äußeren Mündungsöffnung 9,10,11 eines betreffenden Fluidkanals 3,4,5 sind Fluidleitungen oder weitere Bauteile, wie z.B. ein Schalldämpfer anschließbar, so daß das Ventil 1 in einen Fluidkreislauf eingebunden oder mit anderen fluidischen Bauteilen verbunden werden kann. Als Druckmedium wird im vorliegenden Fall Druckluft verwendet, wobei der Einsatz anderer Druckmedien ebenfalls möglich ist.

Beim Ausführungsbeispiel bildet der erste Fluidkanal 3 einen Speisekanal, der üblicherweise mit einer Druckmittelquelle verbunden ist. Ihm liegt auf der entgegengesetzten Seite des Ventilgehäuses 2 der zweite Fluidkanal 4 gegenüber, so daß die Längsachsen der beiden Fluidkanäle 3,4 zusammenfallen. Der zweite Fluidkanal 4 bildet im vorliegenden Fall einen Entlüftungskanal, an den bei der Verwendung von Druckluft als Druckmedium bei Bedarf ein Schalldämpfer anschließbar ist. Der dritte Fluidkanal 5 ist auf derselben Seite des Ventilgehäuses 2 wie der vom zweiten Fluidkanal 4 gebildete Entlüftungskanal angeordnet und bildet einen Arbeitskanal, der mit einem zu betätigenden Verbraucher verbindbar ist. Grundsätzlich könnte der dritte Fluidkanal 5 auch an einer beliebigen anderen Stelle in das Ventilgehäuse 2 einmünden.

Zumindest im Bereich der inneren Mündungsöffnungen 6,7 des ersten und zweiten Fluidkanals 3 bzw. 4 ist jeweils ein die zugeordnete Mündungsöffnung 6,7 vollständig umschließender, zweckmäßigerweise in das Innere des Ventilgehäuses 2 vorstehender Ventilsitz 16,17 gebildet. Beim Ausführungsbeispiel weist auch der Bereich der inneren Mündungsöffnung 8 des dritten Fluidkanals 5 einen vergleichbaren kragenartigen Vorsprung 18 auf.

Bei einem 3/2-Wegeventil kann der Arbeitskanal entweder mit dem Entlüftungskanal oder dem Speisekanal verbunden werden. Es versteht sich, daß bei nicht näher dargestellten Ausführungsformen des Ventils 1 auch andere Ventilarten realisierbar wären, beispielsweise ein 2/2-Wegeventil.

Das Ventil 1 enthält ein im Ventilgehäuse 2 angeordnetes Schaltelement 21, das mittels einer Betätigungseinrichtung 22 zwischen zwei Schaltstellungen umschaltbar ist. Beide möglichen Schaltstellungen stellen beim Ausführungsbeispiel jeweils eine Schließstellung dar, in der das Schaltelement 21 einen der beiden in das Gehäuseinnere des Ventilgehäuses 2 einmündenden ersten bzw. zweiten Fluidkanäle 3,4 fluiddicht verschließt.

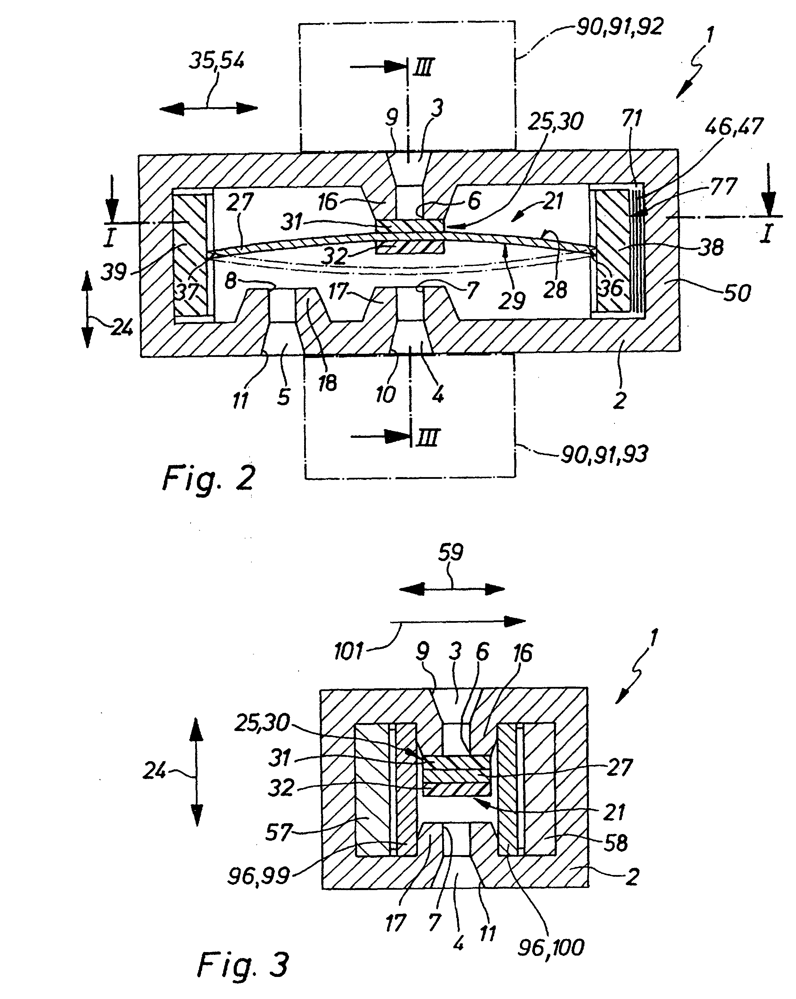

In der ersten Schaltstellung, die in Figur 2 in ausgezogenen Linien dargestellt ist, wird der als Speisekanal ausgebildete erste Fluidkanal 3 fluiddicht verschlossen, wobei gleichzeitig der vom dritten Fluidkanal 5 gebildete Arbeitskanal mit dem am zweiten Fluidkanal 4 gebildeten Entlüftungskanal fluidisch verbunden ist.

In der in Figur 2 strichpunktiert angedeuteten, ebenfalls eine Schließstellung darstellenden zweiten Schaltstellung des Schaltelementes 21 wird der zweite Fluidkanal 4 verschlossen, wobei nunmehr der erste und dritte Fluidkanal 3,5 in fluidischer Verbindung stehen.

In Abhängigkeit vom Ventiltyp müssen nicht beide Schaltstellungen eine Schließstellung definieren. So könnte beispielsweise bei einer alternativen, nicht näher dargestellten Ausführungsform anstatt einer Schließstellung auch eine Drosselstellung vorgesehen sein, in der das Schaltelement 21 den betreffenden Fluidkanal lediglich teilweise verschließt, um die Durchflußmenge zu reduzieren. Auch könnte eine Schaltstellung eine reine Offenstellung sein, in der das Schaltelement lediglich einen Fluidkanal freigibt, ohne einen anderen ganz oder teilweise zu verschließen. Die Anzahl der Schaltstellungen kann je nach Ausführungsform des Ventils 1 ebenfalls variieren.

Im Ausführungsbeispiel wird das Schaltelement 21 in den beiden Schaltstellungen jeweils durch eine von der Betätigungseinrichtung 22 aufgebrachte Haltekraft gehalten. Es weist zumindest unter Einwirkung der Haltekraft in den Schaltstellungen eine in Umschaltrichtung 24 ausgebauchte bzw. gewölbte Form auf. Die Gestaltung des Schaltelementes 21 kann auch derart sein, daß es im unbeaufschlagten Zustand aufgrund seiner Eigenspannungen bereits zu einer Seite hin ausgewölbt ist. Dabei kann beidseits einer Neutralstellung eine stabile ausgewölbte Formgebung vorliegen, so daß sich beim Umschalten ein Schnappeffekt einstellt.

Beim Ausführungsbeispiel enthält das Schaltelement 21 einen eine Verschlußpartie 25 tragenden, blattfederähnlichen, in Umschaltrichtung 24 biegeelastischen Schaltkörper 27. In einer jeweiligen Schließstellung des Schaltelementes 21 liegt die Verschlußpartie 25 am zugeordneten Ventilsitz 16,17 an und verschließt den betreffenden Fluidkanal 3,4 fluiddicht bezüglich des Gehäuseinneren des Ventilgehäuses 2. Dabei ist der längliche Schaltkörper 27 in Umschaltrichtung 24 gewölbt, derart, daß die Verschlußpartie 25 im Bereich des Hochpunktes der Wölbung sitzt. In einer jeweiligen Schließstellung könnte die Haltekraft auch als Schließkraft bezeichnet werden, da sie die Verschlußpartie 25 gegen den zugeordneten Ventilsitz 16,17 drückt.

Beim bevorzugten Ausführungsbeispiel hat der Schaltkörper 27 eine längliche, leisten- oder plattenähnliche Gestalt und kann im wesentlichen rechteckförmig konturiert sein. Er verfügt über zwei Seitenflächen 28,29, die im wesentlichen quer zur Umschaltrichtung 24 verlaufen. Zumindest in einer nicht gewölbten Zwischen- bzw. Neutrallage des Schaltelementes 21, in der sich der Schaltkörper 27 in etwa in einer Ebene erstreckt, sind die Seitenflächen 28,29 quer und insbesondere rechtwinkelig zur Umschaltrichtung 24 ausgerichtet.

Die Verschlußpartie 25 ist beispielsgemäß von einer Dichtkörperanordnung 30 gebildet, wobei auf beiden Seitenflächen 28,29 des Schaltkörpers 27 ein vorzugsweise quaderförmiger Dichtkörper 31,32 angeordnet ist, der mit dem in einer entsprechenden Schließstellung ihm zugeordneten Ventilsitz 16,17 zusammenarbeitet. Es versteht sich, daß die von der Dichtkörperanordnung 30 gebildete Verschlußpartie 25 auch eine andere Form aufweisen könnte. Es ist insbesondere möglich, einen integralen Abschnitt des Schaltkörpers 27 selbst als Verschlußpartie vorzusehen.

Es wäre ebenfalls möglich, anstatt der beim Ausführungsbeispiel vorgesehenen blattfederähnlichen Gestaltung des Schaltelementes 21 eine in Umschaltrichtung 24 federelastische oder biegeelastische, membranähnliche Formgebung vorzusehen.

Das Schaltelement 21 ist beim Ausführungsbeispiel mit seinen beiden quer zur Umschaltrichtung 24 in Längsrichtung 35 des Ventils 1 weisenden Endbereichen 36,37 an jeweils einem Lagerteil 38,39 gelagert, so daß sich das Schaltelement 21 brückenähnlich zwischen den beiden Lagerteilen 38,39 erstreckt. Es kann sich dabei um eine lose Lagerung handeln, wobei das Schaltelement 21 beispielsweise in Vertiefungen der Lagerteile 38,39 lose eingesteckt ist. In den beiden Schaltstellungen verläuft das Schaltelement 21 in Umschaltrichtung 24 gewölbt zwischen den beiden Lagerteilen 38,39.

Zum Halten und Umschalten des Schaltelementes 21 in bzw. zwischen seinen beiden Schaltstellungen weist die Betätigungseinrichtung 22 wenigstens zwei und beim bevorzugten Ausführungsbeispiel eine erste und eine zweite Antriebseinheit 44,45 auf, die jeweils zwischen mehreren Betriebszuständen umschaltbar sind. Vorzugsweise weist sowohl die erste Antriebseinheit 44, wie auch die zweite Antriebseinheit 45 zwei Betriebszustände auf.

In einem ersten Betriebszustand bringt die erste Antriebseinheit 44 die auf das Schaltelement 21 einwirkende Haltekraft auf, die das Schaltelement 21 in einer jeweiligen Schaltstellung hält. In den beispielsgemäß als Schließstellungen ausgebildeten Schaltstellungen bildet die Haltekraft eine Schließkraft, mit der die Verschlußpartie 25 gegen den zugeordneten Ventilsitz 16,17 angedrückt wird.

Zur Erzeugung der Halte- bzw. Schließkraft verfügt die erste Antriebseinheit 44 über eine federelastische Einrichtung 46, die von einer insbesondere als Druckfedereinrichtung 47 ausgeführten Federeinrichtung gebildet ist. Bei der Druckfedereinrichtung 47 kann es sich beispielsweise um eine Tellerfederanordnung handeln.

Die von der Druckfedereinrichtung 47 gebildete federelastische Einrichtung 46 beaufschlagt das Schaltelement 21 in Längsrichtung 35, das sich unter der drückenden Beaufschlagung in Umschaltrichtung 24 seitwärts auswölbt. Beim Ausführungsbeispiel ist die Druckfedereinrichtung 47 zwischen einer sich quer zur Längsrichtung 35 erstreckenden ersten endseitigen Stirnwand 50 des Ventilgehäuses 2 und dem dieser ersten Stirnwand 50 vorgelagerten Lagerteil 38 angeordnet. Die Druckfedereinrichtung 47 ist dabei in Längsrichtung 35 derart vorgespannt, daß sie das Lagerteil 38 von der Stirnwand 50 weg und dabei in Richtung des anderen, im entgegengesetzten Längsendbereich des Ventils 1 angeordneten Lagerteils 39 drückt. Hierbei versteht es sich von selbst, daß die Druckfederanordnung alternativ auch das andere Lagerteil 39 oder beide Lagerteile 38,39 drückend beaufschlagen könnte. Desweiteren könnte in Abwandlung des hier dargestellten bevorzugten Ausführungsbeispieles das Schaltelement 21 auch unmittelbar und ohne Zwischenschaltung der Lagerteile 38,39 mit der Druckfedereinrichtung 47 zusammenarbeiten.

In einem zweiten Betriebszustand ruft die erste Antriebseinheit 44 einen Umschaltzustand des Schaltelementes 21 hervor, in dem die von der federelastischen Einrichtung 46 hervorgerufene Haltekraft ganz oder teilweise aufgehoben ist. Dies geschieht beim Ausführungsbeispiel mittels eines geeigneten Aktors 52 der ersten Antriebseinheit 44. Es kann dabei lediglich eine Entlastung des Schaltelementes 21 oder auch eine Beaufschlagung des Schaltelementes 21 erfolgen, was in der Regel davon abhängen wird, wie stark das Schaltelement 21 durch seine Eigenspannung in die gewölbte Form vorgespannt ist.

Desweiteren verfügt beim Ausführungsbeispiel wenigstens eine und vorliegend die erste Antriebseinheit 44 über eine an eine Spannung anlegbare und von dieser Spannung abtrennbare Piezoelementanordnung 53, die bei der bevorzugten Ausführungsform den Aktor 52 der ersten Antriebseinheit 44 bildet. Alternativ könnte die erste Antriebseinheit auch zum Beispiel mit magnetostriktivem Funktionsprinzip aufgebaut sein.

Beim Anlegen einer Spannung von außen an die Piezoelementanordnung 53 dehnt sich diese in einer Verformungsrichtung 54 aus, wohingegen sie sich beim Abtrennen dieser Spannung wieder zusammenzieht, so daß sie ihre ursprünglichen Abmessungen wieder annimmt. Solange die Spannung an der Piezoelementanordnung 53 anliegt, behält diese ihren ausgedehnten Zustand bei. Auf diese Weise ist durch das Anlegen und Abtrennen der Spannung die erste Antriebseinheit 44 zwischen ihren beiden Betriebszuständen umschaltbar, die sich durch unterschiedliche Längen der Piezoelementanordnung 53 voneinander unterscheiden. Alternativ wäre es auch möglich, die Piezoelementanordnung so auszulegen, daß sie sich beim Anlegen einer Spannung zusammenzieht und beim Abtrennen der Spannung wieder ausdehnt. Beim ersten Betriebszustand handelt es sich zweckmäßigerweise um den unbetätigten, nicht aktivierten Zustand der ersten Antriebseinheit 44, wobei keine Spannung an der Piezoelementanordnung 53 anliegt. Folglich ist der zweite Betriebszustand der ersten Antriebseinheit 44 der betätigte, aktivierte Zustand, bei dem eine Spannung an der Piezoelementanordnung 53 anliegt.

Vorzugsweise verfügt die Piezoelementanordnung 53 über zwei insbesondere quader- oder plattenähnliche Piezoelemente 57,58, die sich in Verformungsrichtung 54 im wesentlichen parallel zum Schaltelement 21 erstrecken und beiderseits des Schaltelementes 21 angeordnet sind. Die Abmessung in einer Querrichtung 59 quer zur Verformungsrichtung 54 und zur Umschaltrichtung 24 der Piezoelemente 57,58 ist relativ gering, verglichen zu den Abmessungen in Umschaltrichtung 24 und in Verformungsrichtung 54, so daß es sich hier um plattenartige Piezoelemente 57,58 handelt.

Die Piezoelemente 57,58 liegen jeweils mit ihrer in Verformungsrichtung 54 weisenden ersten Stirnfläche 62,63 an der der ersten Stirnwand 50 entgegengesetzten zweiten Stirnwand 64 des Ventilgehäuses 2 an. Die Stirnflächen 62,63 der Piezoelemente 57,58 können hierbei fest mit der zugeordneten zweiten Stirnwand 64 verbunden sein.

Die den ersten Stirnflächen 62,63 entgegengesetzten, ebenfalls in Verformungsrichtung 54 weisenden zweiten Stirnflächen 67,68 der Piezoelemente 57,58 sind mit Abstand zur zugeordneten ersten Stirnwand 50 des Ventilgehäuses 2 angeordnet, so daß zwischen den Stirnflächen 67,68 und der zugeordneten Stirnwand 50 ein Ausdehnungsspalt 71 gebildet ist, der der Piezoelementanordnung 53 einen gewissen Spielraum zur Ausdehnung in Verformungsrichtung 54 einräumt.

Beispielsgemäß ist die federelastische Einrichtung 46, die sich wie bereits erwähnt, an der ersten Stirnwand 50 des Ventilgehäuses 2 abstützt, zumindest teilweise im Ausdehnungsspalt 71 angeordnet, so daß sie zusätzlich zum Lagerteil 38 auch die von den Piezoelementen 57,58 gebildete Piezoelementanordnung 53 in Verformungsrichtung 54 drückend beaufschlagt. Die federelastische Einrichtung 46 übt somit auf die zweiten Stirnflächen 67,68 der Piezoelementanordnung 53 eine Kraft aus, die die Piezoelementanordnung 53 in Richtung ihrer nicht ausgedehnten, bei abgetrennter Spannung vorliegenden Ruheposition beaufschlagt. Die federelastische Einrichtung 46 beaufschlagt also zweckmäßigerweise nicht nur das Schaltelement 21, sondern auch die Piezoelementanordnung 53.

Durch die vorliegend als Piezoelementanordnung 53 ausgeführte erste Antriebseinheit 44 ist beim Ausführungsbeispiel der in Längsrichtung 35 gemessene Abstand der beiden Endbereiche 36,37 des Schaltelementes 21 vorgebbar. Dies ist in der vorliegenden Ausführungsform dadurch erreicht, daß das aufgrund seiner Eigenspannung zur Einnahme einer gestreckten Formgebung tendierende federelastische Schaltelement 21 zumindest mit einem seiner in Verformungsrichtung 54 weisenden Endbereiche 36,37 mit der Piezoelementanordnung 53 bewegungsgekoppelt ist. Hierfür ist das dem einen Endbereich 36 zugeordnete Lagerteil 38 mit den der federelastischen Einrichtung 46 zugeordneten benachbarten Endbereichen 74,75 der Piezoelemente 57,58 fest verbunden. Auch das andere Lagerteil kann mit dem zugeordneten benachbarten Endbereich 74',75' der Piezoelemente 57,58 verbunden sein.

Bei Verwendung eines im unbeaufschlagten Zustand von sich aus eine ausgewölbte Formgebung aufweisenden Schaltelementes 21 kann vorgesehen sein, daß bei betätigter erster Antriebseinheit 44 ohne nennenswerte Verformung des Schaltelementes lediglich die die Haltekraft liefernde Vorspannung ganz oder teilweise aufgehoben wird, so daß die Schaltkraft der zweiten Antriebseinheit 45 ausreicht, das Schaltelement 21 umzuschalten.

Das Lagerteil 38 ist z.B. quaderförmig ausgebildet und erstreckt sich in Querrichtung 59 zwischen den beiden Piezoelementen 57,58. Die der federelastischen Einrichtung 46 zugewandte Beaufschlagungsfläche 77 des Lagerteils 38 schließt bündig mit den benachbarten Stirnflächen 67,68 der Piezoelemente 57,58 ab. Das Lagerteil 38 bewegt sich somit in Verformungsrichtung 54 vom anderen Lagerteil 39 weg bzw. auf dieses zu, wenn die Piezoelementanordnung 53 mit einer Spannung beaufschlagt bzw. von der Spannung abgetrennt wird.

Zum Anlegen der Spannung an die Piezoelementanordnung 53 ist von den Endbereichen 74,75 der Piezoelemente 57,58 und den jeweils in Verformungsrichtung 54 entgegengesetzten Endbereichen 81,82 der Piezoelemente 57,58 jeweils ein elektrischer Anschluß 83,84,85,86 aus dem Ventilgehäuse 2 heraus nach außen geführt, wobei zwischen den Anschlüssen 83,85 des Piezoelementes 57 und den Anschlüssen 84,86 des Piezoelementes 58 die Spannung anlegbar ist. Zweckmäßigerweise ist die Spannung betragsmäßig und bezüglich ihrer Polarität zwischen den jeweiligen Anschlüssen 83,85 bzw. 84,86 der Piezoelemente 57, 58 gleich gewählt, so daß eine übereinstimmende Ausdehnung der beiden Piezoelemente 57,58 erreichbar ist.

Die elektrischen Anschlüsse 83,84,85,86 sind in Figur 1 strichpunktiert schematisch angedeutet und münden auf verschiedenen Seiten des Ventilgehäuses 2 nach außen. Selbstverständlich ist es ebenfalls möglich, die elektrischen Anschlüsse 83,84,85,86 derart nach außen zu führen, daß sie an einer gewünschten Stelle und zweckmäßigerweise auf einer einzigen Seite des Ventilgehäuses 2 nach außen führen. Außerdem ist es vorteilhaft, wenn die elektrischen Anschlüsse 83,84, 85,86 mit gleicher Polarität elektrisch kurzgeschlossen sind, so daß lediglich zwei Anschlüsse nach außen geführt werden müssen. Beim Ausführungsbeispiel könnten beispielsweise die jeweils in Querrichtung 59 gegenüberliegenden elektrischen Anschlüsse 83,84 bzw. 85,86 unterschiedlicher Piezoelemente 57,58 miteinander kurzgeschlossen werden.

Der erste Betriebszustand der ersten Antriebseinheit 44 stellt beim bevorzugten Ausführungsbeispiel den unbetätigten, nicht aktivierten Zustand dar. Das bedeutet, daß in diesem ersten Betriebszustand keine Spannung an die Piezoelementanordnung 53 angelegt ist. Dieser erste Betriebszustand wird somit ohne Zuführung von zusätzlicher Energie gehalten.

Zum Umschalten in ihren zweiten Betriebszustand wird die erste Antriebseinheit 44 betätigt, indem eine Spannung an die elektrischen Anschlüsse 83,84,85,86 der Piezoelementanordnung 53 angelegt wird. Dadurch dehnen sich die Piezoelemente 57,58 der Piezoelementanordnung 53 beim Ausführungsbeispiel in Verformungsrichtung 55 aus und drücken die beiden Lagerteile 38,39 entgegen der von der Druckfedereinrichtung 47 erzeugten Druckkraft auseinander, wobei sich das eine Lagerteil 39 beispielsgemäß gehäusefest abstützt, so daß sich lediglich das andere Lagerteil 38 in Verformungsrichtung 54 verschiebt. Hierdurch wird die von der Druckfedereinrichtung 47 hervorgerufene, in Umschaltrichtung 24 auf das Schaltelement 21 einwirkende Haltekraft vermindert oder ganz aufgehoben und das Schaltelement 21 befindet sich im Umschaltzustand. Es kann bei Bedarf vorgesehen sein, daß sich dabei die Verschlußpartie 25 des Schaltelementes 21 unter Verringerung seiner Krümmung in Umschaltrichtung 24 vom Ventilsitz 16 wegbewegt, wobei das Schaltelement 21 letztlich sogar vollständig gestreckt sein kann. In diesem Falle kann das Schaltelement 21 während des Umschaltzustandes eine zwischen den beiden Schließstellungen befindliche Zwischenstellung einnehmen, in der es in etwa die Hälfte der Umschaltwegstrecke zurückgelegt hat. Die erste Antriebseinheit 44 dient letztlich dazu, das Schaltelement 21 in einen Umschaltzustand überzuführen, in dem die Vorspannung des Schaltelementes 21 verringert ist.

Die zweite Antriebseinheit 45 der Betätigungseinrichtung 22 ist zwischen einem Ausgangszustand und einem Umschalt-Betriebszustand umschaltbar. Im Umschalt-Betriebszustand wird dem Schaltelement 21 eine in der gewünschten Umschaltrichtung 24 wirksame und ein Umschalten des durch Betätigung der ersten Antriebseinheit 44 in Umschaltzustand befindlichen Schaltelementes 21 in Richtung der gewünschten Schaltstellung hervorrufende Umschaltkraft auferlegt. Mittels der zweiten Antriebseinheit 45 wird demnach eine auf das Schaltelement 21 einwirkende Umschaltkraft hervorgerufen, die in die Richtung wirkt, in die sich das Schaltelement 21 zum Einnehmen der neuen, gewünschten Schaltstellung bewegen soll, so daß sozusagen die nach dem Umschaltvorgang eingenommene Schaltstellung des Schaltelementes 21 über die zweite Antriebseinheit 45 wählbar oder vorgebbar ist. Während die erste Antriebseinheit 44 maßgeblich für die Erzeugung der Haltekraft in den beiden Schaltstellungen verantwortlich ist, liegt die Aufgabe der zweiten Antriebseinheit 45 maßgeblich in der Hervorrufung einer Umschaltkraft in einer bestimmten Umschaltrichtung.

Vorteilhafterweise arbeitet die zweite Antriebseinheit 45 kontaktlos mit dem Schaltelement 21 zusammen. Sie ist beim Ausführungsbeispiel von einem Magnetantrieb 89 gebildet, der eine Magnetanordnung 90 aufweist, die ein Magnetfeld hervorruft, das zur Erzeugung einer auf das Schaltelement 21 einwirkenden Kraft dient. Alternativ könnte die zweite Antriebseinheit 45 auch zum Beispiel auf elektrostatischem Wirkprinzip basieren.

Die Magnetanordnung 90 könnte von einer schaltbaren Elektromagnetanordnung 91 gebildet sein, deren Magnetfeld derart mit dem Schaltelement 21 zusammenarbeitet, daß es eine auf das Schaltelement 21 einwirkende Kraft hervorrufen kann. Die Elektromagnetanordnung 91 ist in Figur 2 strichpunktiert angedeutet und weist zwei Elektromagneten 92,93 auf, die in Umschaltrichtung 24 auf beiden Seiten des Schaltelementes 21 und beispielsgemäß außen am Ventilgehäuse 2 angeordnet sind.

Besteht nun das Schaltelement 21 zumindest teilweise aus magnetisierbarem und insbesondere ferromagnetischem Material, so kann die Umschaltkraft durch Einschalten eines der Elektromagneten 92,93 hervorgerufen werden, je nachdem in welche der beiden möglichen Schaltstellungen das Schaltelement 21 bewegt werden soll.

Alternativ hierzu ist die Magnetanordnung 90 beim Ausführungsbeispiel von einer Permanentmagnetanordnung 96 gebildet, wobei sich im Magnetfeld der Magnetanordnung wenigstens ein bestrombarer elektrischer Leiter 97 befindet, der zumindest abschnittsweise quer zu den Magnetfeldlinien verläuft und derart mit dem Schaltelement 21 zusammenarbeitet, daß in bestromtem Zustand eine in Umschaltrichtung 24 gerichtete Kraft, die die Umschaltkraft darstellt, auf das Schaltelement 21 ausgeübt wird.

Bei der bevorzugten Ausführungsvariante enthält die Permanentmagnetanordnung 96 zwei Permanentmagnete 99,100 die insbesondere plattenähnlich ausgeführt sind. Sie erstrecken sich im wesentlichen parallel zu den ebenfalls plattenähnlichen Piezoelementen 57,58 der Piezoelementanordnung 53 und sind flankierend auf entgegengesetzten Seiten des Schaltelementes 21 angeordnet. Das Schaltelement 21 sitzt somit in Querrichtung 59 zwischen den Permanentmagneten 99,100, die wiederum zwischen dem Schaltelement 21 einerseits und dem jeweils zugeordneten Piezoelement 57,58 andererseits vorgesehen sind, wobei die Permanentmagnete 99,100 sowohl zum betreffenden Piezoelement 57,58 als auch zum Schaltelement 21 beabstandet sind. Es könnte auch vorgesehen sein, daß die Permanentmagneten 99,100 auf der dem Schaltelement 21 entgegengesetzten Außenseite der Piezoelemente 57,58 angeordnet sind. In Längsrichtung 35 bzw. in Verformungsrichtung 54 der Piezoelementanordnung befinden sich die Permanentmagneten 99,100 zwischen den beiden Lagerteilen 38,39, wobei hier ebenfalls ein Spalt zwischen den Lagerteilen 38,39 und den Permanentmagneten 99,100 vorgesehen ist.

In Umschaltrichtung 24 erstrecken sich die Permanentmagneten 99,100 innerhalb des Ventilgehäuses 2 im wesentlichen vollständig über die gesamte Ausdehnung des Inneren des Ventilgehäuses, so daß sich das Schaltelement 21 in jeder möglichen Lage und insbesondere in jeder Schaltstellung in dem von den Permanentmagneten 99,100 erzeugten Magnetfeld befindet. Die Magnetfeldlinien verlaufen quer zur Umschaltrichtung 24 in Querrichtung 59 des Ventils.

Die beiden Permanentmagnete 99,100 sind beim Ausführungsbeispiel derart polarisiert, daß der Nordpol des einen Permanentmagneten 99 und der Südpol des anderen Permanentmagneten 100 dem Schaltelement 21 zugewandt sind, so daß im Bereich des Schaltelementes 21 die Magnetfeldlinien gemäß Pfeil 101 vom einen Permanentmagneten 99 zum anderen Permanentmagneten 100 hin verlaufen.

Eine Feldbündelung ist beispielsweise dadurch möglich, daß ein Schaltelement 21 aus ferromagnetischem Material verwendet wird. Ferner ist eine Verstärkung des Magnetfeldes z.B. dadurch möglich, daß man einen ferromagnetischen Rückschluß außen zwischen den beiden Permanentmagneten vorsieht.

Beim Ausführungsbeispiel ist der elektrische Leiter 97 von einer elektrisch leitenden Partie des Schaltelementes 21 gebildet, wobei vorzugsweise der Schaltkörper 27 aus elektrisch leitfähigem Material besteht, so daß er als elektrischer Leiter dient. Um den elektrischen Stromfluß im Schaltkörper 27 hervorrufen zu können, verfügt dieser über zwei nach außen geführte elektrische Anschlüsse 105,106, an die eine Stromoder eine Spannungsquelle anschließbar ist. Alternativ hierzu wäre auch die Möglichkeit gegeben, wenigstens einen am Schaltelement 21 angeordneten, separaten Leiter 97 vorzusehen, der sich zwischen den elektrischen Anschlüssen 105,106 erstreckt und in Figur 1 schematisch strichpunktiert angedeutet ist. Ein solcher Leiter könnte das Schaltelement 21 spulenähnlich umschließen.

Wird die zweite Antriebseinheit 45 dadurch aktiviert, daß ein Stromfluß in dem als Leiter 97 dienenden Schaltkörper 27 erzeugt wird, so erfahren die im Schaltkörper 27 vorhandenen Elektronen aufgrund des von der Permanentmagnetanordnung 96 hervorgerufenen Magnetfeldes, in dem sich die Elektronen befinden, eine Lorentz-Kraft, die quer zur Magnetfeldrichtung 101 und quer zur gewählten Stromrichtung verläuft. Wird ein Stromfluß im Schaltkörper 27 ausgehend vom Lagerteil 39 in Richtung des durch die federelastische Einrichtung 46 beaufschlagten Lagerteils 38 gemäß Pfeil 103 in Figur 1 (technische Stromrichtung) bewirkt, so wirkt die Lorentz-Kraft in Umschaltrichtung 24 in der Art auf das Schaltelement 21 ein, daß die von der Lorentz-Kraft gebildete Umschaltkraft das Schaltelement 21 in Richtung des Ventilsitzes 17 des zweiten Fluidkanals 4 beaufschlagt. Durch eine Umkehr der Stromflußrichtung 103 kann eine Umschaltkraft in entsprechend entgegengesetzter Richtung erreicht werden. Dies wäre auch durch eine Umkehr der Magnetfeldrichtung 101 möglich, wobei hierfür anstatt der Permanentmagnetanordnung 96 eine entsprechende Elektromagnetanordnung zum Einsatz kommen kann. Die im Umschalt-Betriebszustand vorliegende Richtung der Umschaltkraft läßt sich also in Abhängigkeit von der momentanen Schaltstellung bedarfsgemäß vorgeben.

Die im zweiten Betriebszustand der ersten Antriebseinheit 44 in die Piezoelemente 57,58 eingespeiste elektrische Energie kann auch zur Erzeugung des Stromflusses im Schaltkörper 27 genutzt werden. Hierfür müßte lediglich der Schaltkörper 27 in geeigneter Weise mit den Endbereichen 74,75,81,82 der Piezoelemente 57,58 bzw. mit deren elektrischen Anschlüssen 83,84,85,86 verbunden werden. Zur Strombegrenzung des Stromes im Schaltkörper 27 kann es hierbei notwendig sein, einen zusätzlichen elektrischen Widerstand einzuschalten. Die aus der Piezoelementanordnung 53 in dem Schaltkörper 27 abgeleitete Energie ruft dann den zur Erzeugung der Lorentz-Kraft dienenden Strom hervor. Auf diese Weise kann eine weitere Einsparung von Schaltenergie erreicht werden.

Im folgenden wird ein Umschaltvorgang beispielhaft zusammenhängend erläutert.

In einer Grundstellung des Ventils 1 befindet sich die erste Antriebseinheit 44 in ihrem ersten Betriebszustand und das Schaltelement 21 nimmt die erste Schaltstellung ein, in der es den ersten Fluidkanal 3 verschließt und am ersten Ventilsitz 16 anliegt. Die zweite Antriebseinheit 45 befindet sich dabei im deaktivierten, stromlosen Ausgangszustand.

Durch das Anlegen einer Spannung an die Piezoelementanordnung 53 wird die erste Antriebseinheit 44 in ihren zweiten Betriebszustand umgeschaltet. Aufgrund der Ausdehnung der Piezoelemente 57,58 der Piezoelementanordnung 53 wird das Lagerteil 38 entgegen der Kraft der federelastischen Einrichtung 46 bewegt, so daß das Schaltelement 21 seinen Umschaltzustand mit reduzierter Haltekraft einnimmt.

Zeitgleich oder auch zeitlich verzögert wird die zweite Antriebseinheit 45 aktiviert und durch Anlegen einer Spannung an die elektrisch mit dem Schaltkörper 27 verbundenen elektrischen Anschlüsse 105,106 in den Umschalt-Betriebszustand gebracht. Dies ruft im Schaltelement 21 eins Umschaltkraft in Richtung des dem zweiten Fluidkanal 4 zugeordneten zweiten Ventilsitzes 17 hervor, so daß es sich in Richtung zur anderen Schaltstellung verbiegt. Die zweite Antriebseinheit gibt also die Umschaltrichtung vor.

Sobald das Schaltelement 21 bei der Umschaltbewegung seine Zwischen- bzw. Neutralstellung passiert hat, kann die erste Antriebseinheit 44 vom zweiten Betriebszustand in den ersten Betriebszustand zurückgeschaltet werden. Dadurch erfährt das Schaltelement 21 erneut eine in Längsrichtung drückende Beaufschlagung und wird im Sinne eines Auswölbens in Richtung der gewünschten Schaltstellung zum betreffenden zweiten Ventilsitz 17 hin mit einer Haltekraft beaufschlagt und mit seiner Verschlußpartie 25 fest gegen den zweiten Ventilsitz 17 angedrückt.

Das Zurückschalten der ersten Antriebseinheit 44 in den ersten Betriebszustand erfolgt im vorliegenden Fall durch Abtrennen der Spannung von der Piezoelementanordnung 53, wobei eine nicht näher dargestellte Möglichkeit zum Abfließen der Ladung geboten wird, so daß sich die Piezoelementanordnung 53 in Verformungsrichtung 54 wieder zusammenzieht, wodurch sich das Schaltelement 21 ausgehend von der während des Umschaltens zwischenzeitlich eingenommenen gestreckten Zwischenstellung auf den zweiten Ventilsitz 17 zuwölbt. Die Wölbungsrichtung wird durch die von der zweiten Antriebseinheit 45 auf das Schaltelement 21 ausgeübte Umschaltkraft bestimmt, so daß ein sicheres Umschalten gewährleistet ist. Das Schaltelement 21 nimmt am Ende des Umschaltvorganges die zweite Schaltstellung ein, so daß die zweite Antriebseinheit 45 wieder deaktiviert werden kann. Diese Deaktivierung könnte auch dann schon erfolgen, wenn das Schaltelement 21 durch die Zwischenstellung hindurchgeschwenkt ist und bereits wieder von der Haltekraft beaufschlagt wird.

Der Umschaltvorgang von der zweiten in die erste Schaltstellung des Schaltelementes 21 verläuft analog.

Durch geeignete zeitliche Abstimmung der Betätigung der beiden vorzugsweise unabhängig voneinander betätigbaren Antriebseinheiten läßt sich das Betriebsverhalten des Ventils, insbesondere der Energieaufwand und die Schaltgeschwindigkeit optimieren.

Eine Kombination aus einem Piezoantrieb, wie er durch die erste Antriebseinheit 44 realisiert ist, und einem Magnetantrieb 89, der die zweite Antriebseinheit 45 bildet, ist sehr vorteilhaft, da durch den Piezoantrieb große Haltekräfte realisiert werden können, während der Magnetantrieb 89 ein sicheres Umschalten auch bei großem Schalthub gewährleistet. Bei dieser Antriebskombination können kurze Schaltzeiten bei geringem Schaltenergieaufwand erreicht werden. Die definierten Schaltstellungen werden stromlos gehalten, so daß der Gesamtenergieverbrauch gering ist. Im Vergleich zu elektrostatischen Antrieben sind die hier gewählten Antriebsarten unempfindlich gegen Verschmutzung durch Partikel oder Kondensat. Durch einen Piezoantrieb alleine könnte nur eine geringe öffnungsweite erreicht werden, da ein Umschaltvorgang nur schwer zu realisieren ist. In Kombination mit dem Magnetantrieb 89 ist ein sicheres Umschalten des Schaltelementes 21 über die Neutrallage hinweg möglich, so daß große Öffnungsweiten zu realisieren sind. Ein Magnetantrieb alleine kann nur unter Inkaufnahme von großen Schaltleistungen und großen Stromdichten die gewünschte große Haltekraft aufbringen.

Das Ventil kann außerdem einen mikrotechnologischen Aufbau aufweisen, so daß es als sogenanntes "Mikro-Ventil" ausgeführt ist. Die Abmessungen des Ventilgehäuses 2 betragen hierbei wenige Millimeter. Bei der Herstellung eines derartigen Mikro-Ventils werden mikromechanische Arbeitsverfahren, insbesondere Ätzverfahren angewandt.

## Patentansprüche

1. Ventil, mit einem in einem Ventilgehäuse (2) angeordneten Schaltelement (21), das mittels einer Betätigungseinrichtung (22) zwischen wenigstens zwei Schaltstellungen umschaltbar ist, in denen das Schaltelement (21) durch eine von der Betätigungseinrichtung (22) aufbringbare Haltekraft gehalten wird, **dadurch gekennzeichnet, daß** die Betätigungseinrichtung (22) wenigstens zwei aktiv betätigbare Antriebseinheiten (44, 45) aufweist, die jeweils zwischen mehreren Betriebszuständen umschaltbar sind und von denen eine erste Antriebseinheit (44) maßgeblich für die Erzeugung der Haltekraft in den beiden Schaltstellungen und eine zweite Antriebseinheit (45) maßgeblich für das Hervorrufen der Umschaltkraft verantwortlich ist, wobei die erste Antriebseinheit (44) in einem nicht aktivierten ersten Betriebszustand in beiden Schaltstellungen ohne Zuführung zusätzlicher Energie von außen die auf das Schaltelement (21) einwirkende Haltekraft aufbringt und in einem durch Energiezufuhr von außen aktivierten zweiten Betriebszustand einen Umschaltzustand des Schaltelementes (21) hervorruft, in dem die Haltekraft zumindest teilweise aufgehoben ist, und wobei die zweite Antriebseinheit (45) aus einem Ausgangszustand in eine Umschalt-Betriebszustand umschaltbar ist, in dem dem im Umschaltzustand befindlichen Schaltelement (21) eine in der gewünschten Umschaltrichtung (24) wirksame und ein Umschalten in
Richtung der gewünschten Schaltstellung hervorrufende Umschaltkraft auferlegt wird.

2. Ventil nach Anspruch 1, **dadurch gekennzeichnet, daß** mindestens eine Schaltstellung eine Schließstellung darstellt, in der das Schaltelement (21) einen in das Gehäuseinnere des Ventilgehäuses (2) einmündenden Fluidkanal (3,4) fluiddicht verschließt.

3. Ventil nach Anspruch 1 oder 2, **dadurch gekennzeichnet, daß** lediglich zwei Antriebseinheiten (44,45) vorgesehen sind, die insbesondere jeweils zwischen zwei Betriebszuständen umschaltbar sind.

4. Ventil nach einem der Ansprüche 1 bis 3, **dadurch gekennzeichnet, daß** die erste Antriebseinheit (44) über mindestens einen Aktor (52) verfügt, mittels dem eine auf das Schaltelement (21) einwirkende Kraft hervorgerufen werden kann.

5. Ventil nach einem der Ansprüche 1 bis 4, **dadurch gekennzeichnet, daß** wenigstens eine und insbesondere die erste Antriebseinheit (44) eine an eine Spannung anlegbare und von dieser Spannung abtrennbare Piezoelementanordnung (53) aufweist, die sich beim Anlegen der Spannung in einer Verformungsrichtung (54) ausdehnt und beim Abtrennen der Spannung wieder zusammenzieht, oder umgekehrt, so daß durch Anlegen und Abtrennen der Spannung die Antriebseinheit (44) zwischen zwei Betriebszuständen umschaltbar ist.

6. Ventil nach Anspruch 5, **dadurch gekennzeichnet, daß** sich die erste Antriebseinheit (44) bei an die Piezoelementanordnung (53) angelegter Spannung im zweiten und bei abgetrennter Spannung im ersten Betriebszustand befindet.

7. Ventil nach Anspruch 5 oder 6 in Verbindung mit Anspruch 4, **dadurch gekennzeichnet, daß** der Aktor (52) von der Piezoelementanordnung (53) gebildet ist.

8. Ventil nach einem der Ansprüche 5 bis 7, **dadurch gekennzeichnet, daß** die Piezoelementanordnung (53) zwei insbesondere quader- oder plattenähnliche Piezoelemente (57,58) aufweist, die sich in Verformungsrichtung (54) im wesentlichen parallel zum Schaltelement (21) und beiderseits des Schaltelementes (21) erstrecken.

9. Ventil nach einem der Ansprüche 1 bis 8, **dadurch gekennzeichnet, daß** das Schaltelement (21) in den unter Einwirkung der Haltekraft vorgegebenen Schaltstellungen eine in der Richtung der Umschaltbewegung ausgebauchte oder ausgewölbte Form aufweist.

10. Ventil nach Anspruch 9, **dadurch gekennzeichnet, daß** der Abstand der beiden Endbereiche (36,37) des Schaltelementes (21) durch die erste Antriebseinheit (44) vorgebbar ist.

11. Ventil nach Anspruch 9 oder 10, **dadurch gekennzeichnet, daß** das Schaltelement (21) zumindest mit einem seiner beiden Endbereiche (36,37) mit der ersten Antriebseinheit (44) bewegungsgekoppelt ist.

12. Ventil nach einem der Ansprüche 1 bis 11, **dadurch gekennzeichnet, daß** das Schaltelement (21) leisten- oder membranähnliche Gestalt hat und über biegeelastische Eigenschaften verfügt, wobei es beim Umschalten zwischen den Schaltstellungen eine elastische Biegeverformung quer zu seiner Ausdehnungsrichtung erfährt.

13. Ventil nach Anspruch 12, **dadurch gekennzeichnet, daß** das Schaltelement (21) einen eine Verschlußpartie (25) aufweisenden, blattfeder- oder membranähnlichen, in Umschaltrichtung (24) biegeelastischen Schaltkörper (27) aufweist.

14. Ventil nach Anspruch 13, **dadurch gekennzeichnet, daß** die Verschlußpartie (25) ein einstückiger Bestandteil des Schaltkörpers (27) ist.

15. Ventil nach einem der Ansprüche 1 bis 14, **dadurch gekennzeichnet, daß** die erste Antriebseinheit (44) zum Aufbringen der Haltekraft über eine federelastische Einrichtung (46) verfügt, die insbesondere von einer Federeinrichtung gebildet ist und dabei vorzugsweise von einer Druckfedereinrichtung (47).

16. Ventil nach Anspruch 11 oder 12 in Verbindung mit Anspruch 13 oder 14, **dadurch gekennzeichnet, daß** die federelastische Einrichtung (46) das Schaltelement (21) quer zur Umschaltrichtung (24) drückend beaufschlagt, so daß es sich in Umschaltrichtung (24) auswölbt.

17. Ventil nach einem der Ansprüche 1 bis 16, **dadurch gekennzeichnet, daß** wenigstens eine Antriebseinheit (44,45) und insbesondere die zweite Antriebseinheit (45) kontaktlos mit dem Schaltelement (21) zusammenarbeitet.

18. Ventil nach einem der Ansprüche 1 bis 17, **dadurch gekennzeichnet, daß** wenigstens eine Antriebseinheit (44,45) und insbesondere die zweite Antriebseinheit (45) von einem Magnetantrieb (89) gebildet ist, der eine Magnetanordnung (90) aufweist, die ein Magnetfeld hervorruft, das zur Erzeugung einer auf das Schaltelement (21) einwirkenden Kraft dient.

19. Ventil nach Anspruch 18, **dadurch gekennzeichnet, daß** die Magnetanordnung (90) von einer schaltbaren Elektromagnetanordnung (91) gebildet ist, deren Magnetfeld derart mit dem Schaltelement (21) zusammenarbeitet, daß es eine auf das Schaltelement (21) einwirkende Kraft hervorrufen kann.

20. Ventil nach Anspruch 18, **dadurch gekennzeichnet, daß** sich in dem von der Magnetanordnung (90) erzeugten Magnetfeld wenigstens ein bestrombarer elektrischer Leiter (97) befindet, der zumindest abschnittsweise quer zu den Magnetfeldlinien verläuft und derart mit dem Schaltelement (21) zusammenarbeitet, daß in bestromtem Zustand eine in Umschaltrichtung (24) gerichtete Kraft auf das Schaltelement (21) ausgeübt wird.

21. Ventil nach Anspruch 20 in Verbindung mit einem der Ansprüche 5 bis 8, **dadurch gekennzeichnet, daß** die in der Piezoelementanordnung (53) gespeicherte elektrische Energie in den elektrischen Leiter (97) ableitbar ist, so daß im Leiter (97) ein zur Erzeugung der als Umschaltkraft wirkenden Lorentz-Kraft dienender Strom fließt.

22. Ventil nach Anspruch 20 oder 21, **dadurch gekennzeichnet, daß** die Magnetanordnung (90) von einer Permanentmagnetanordnung (96) gebildet ist, die zwei insbesondere plattenähnliche Permanentmagnete (99,100) enthält, die das Schaltelement (21) auf gegenüberliegenden Seiten flankieren, so daß die Magnetfeldlinien quer zur Umschaltrichtung (24) verlaufen.

23. Ventil nach einem der Ansprüche 20 bis 22, **dadurch gekennzeichnet, daß** der mindestens eine Leiter (97) am Schaltelement (21) angeordnet oder von zumindest einer leitenden Partie des Schaltelementes (21) gebildet ist.

24. Ventil nach einem der Ansprüche 1 bis 23, **dadurch gekennzeichnet, daß** sich das im Umschaltzustand befindliche Schaltelement (21) in einer Zwischenstellung zwischen zwei Schaltstellungen befindet.

25. Ventil nach Anspruch 24, **dadurch gekennzeichnet, daß** das Schaltelement (21) in der Zwischenstellung in etwa die Hälfte der Umschaltwegstrecke zurückgelegt hat.

26. Ventil nach einem der Ansprüche 1 bis 25, **gekennzeichnet durch** einen mikrotechnologischen Aufbau.

27. Ventil nach einem der Ansprüche 1 bis 26, **dadurch gekennzeichnet, daß** es sich um ein 3/2-Wegeventil handelt.

## Claims

1. Valve comprising a switching element (21) located in a valve housing (2) and switchable by means of an actuating device (22) between at least two switching positions in which the switching element (21) is held by a retaining force applied by the actuating device (22), **characterised in that** the actuating device (22) comprises at least two actively operable drive units (44, 45), each of which is switchable between several operating states and of which a first drive unit (44) is substantially responsible for the generation of the retaining force in the two switching positions and a second drive unit (45) is substantially responsible for creating the change-over force, the first drive unit (44) generating the retaining force acting on the switching element (21) in a non-activated first operating state in the two switching positions without the supply of additional external energy and causing, in a second operating state activated by external energy supply, a change-over state of the switching element (21), in which the retaining force is at least partially cancelled, and the second drive unit (45) being switchable from an initial state to a change-over operating state, in which a change-over force effective in the desired change-over direction (24) and causing a change-over in the direction of the desired switching position is applied to the switching element (21) in its change-over state.

2. Valve according to claim 1, **characterised in that** at least one switching position represents a closed position in which the switching element (21) forms a fluid-tight seal at a fluid passage (3, 4) leading into the interior of the valve housing (2).

3. Valve according to claim 1 or 2, **characterised in that** only two drive units (44, 45) are provided, each being in particular switchable between two operating states.

4. Valve according to any of claims 1 to 3, **characterised in that** the first drive unit (44) comprises at least one actuator (52), by means of which a force acting on the switching element (21) can be generated.

5. Valve according to any of claims 1 to 4, **characterised in that** at least one and in particular the first drive unit (44) comprises a piezoelectric element arrangement (53) which can be connected to and disconnected from a voltage and expands in one direction of deformation (54) when this voltage is applied while contracting on disconnection of the voltage or vice versa, so that the drive unit (44) is switchable between two operating states by applying and disconnecting the voltage.

6. Valve according to claim 5, **characterised in that** the first drive unit (44) is in the second operating state when voltage is applied to the piezoelectric element arrangement (53) and in the first operating state when the voltage is disconnected.

7. Valve according to claim 5 or 6 in conjunction with claim 4, **characterised in that** the actuator (52) is represented by the piezoelectric element arrangement (53).

8. Valve according to any of claims 5 to 7, **characterised in that** the piezoelectric element arrangement (53) comprises two in particular cuboid or plate-like piezoelectric elements (57, 58) extending in the direction of deformation (54) substantially parallel to the switching element (21) and on both sides of the switching element (21).

9. Valve according to any of claims 1 to 8, **characterised in that** the switching element (21) has a shape bulging or domed in the direction of the change-over movement in the switching positions predetermined by the influence of the retaining force.

10. Valve according to claim 9, **characterised in that** the distance between the two end areas (36, 37) of the switching element (21) can be predetermined by the first drive unit (44).

11. Valve according to claim 9 or 10, **characterised in that** the switching element (21) is coupled for movement to the first drive unit (44) with at least one of its two end areas (36, 37).

12. Valve according to any of claims 1 to 11, **characterised in that** the switching element (21) has a strip- or membrane-like shape and is flexible in bending, being resiliently deformed by bending at right angles to its direction of expansion during the change-over between the two switching positions.

13. Valve according to claim 12, **characterised in that** the switching element (21) comprises a leaf spring- or membrane-like switching body (27) flexible in bending in the change-over direction (24) and provided with a sealing section (25).

14. Valve according to claim 13, **characterised in that** the sealing section (25) is an integral part of the switching body (27).

15. Valve according to any of claims 1 to 14, **characterised in that** the first drive unit (44) is provided with a spring-elastic device (46) for applying the retaining force, this being in particular represented by a spring device and preferably a pressure spring device (47).

16. Valve according to claim 11 or 12 in conjunction with claim 13 or 14, **characterised in that** the spring-elastic device (46) exerts a pressure at right angles to the change-over direction (24) on the switching element (21), so that it arches in the change-over direction (24).

17. Valve according to any of claims 1 to 16, **characterised in that** at least one drive unit (44, 45) and in particular the second drive unit (45) acts with the switching element (21) in a contactless manner.

18. Valve according to any of claims 1 to 17, **characterised in that** at least one drive unit (44, 45) and in particular the second drive unit (45) is represented by a magnetic drive (89) comprising a magnet arrangement (90) causing a magnetic field for the generation of a force acting on the switching element (21).

19. Valve according to claim 18, **characterised in that** the magnet arrangement (90) is represented by a switchable solenoid arrangement (91), the magnetic field of which acts together with the switching element (21) so that it can generate a force acting on the switching element (21).

20. Valve according to claim 18, **characterised in that** the magnetic field produced by the magnet arrangement (90) includes at least one electrical conductor (97) to which a current can be applied, at least a section of which extends at right angles to the magnetic field lines and which acts together with the switching element (21) so that a force in the change-over direction (24) is applied to the switching element (21) in the current-carrying state.

21. Valve according to claim 20 in conjunction with any of claims 5 to 8, **characterised in that** the electrical energy stored in the piezoelectric element arrangement (53) can be diverted to the electrical conductor (97), so that a current for producing the Lorentz force acting as change-over force flows in the conductor (97).

22. Valve according to claim 20 or 21, **characterised in that** the magnet arrangement (90) is represented by a permanent magnet arrangement (96) including in particular two plate-like permanent magnets (99, 100) flanking the switching element (21) on opposite sides, so that the magnetic field lines extend at right angles to the change-over direction (24).

23. Valve according to any of claims 20 to 22, **characterised in that** the at least one conductor (97) is located on the switching element (21) or represented by at least one conducting section of the switching element (21).

24. Valve according to any of claims 1 to 23, **characterised in that** the switching element (21) is in an intermediate position between two switching positions in its change-over state.

25. Valve according to claim 24, **characterised in that** the switching element (21) has covered approximately half of the change-over distance in the intermediate position.

26. Valve according to any of claims 1 to 25, **characterised by** a micro-technological structure.

27. Valve according to any of claims 1 to 26, **characterised in that** the valve is a 3/2-way valve.

## Revendications

1. Soupape avec un élément de commutation (21) disposé dans un boîtier de soupape (2) et qui peut commuter, au moyen d'un dispositif d'actionnement (22), entre au moins deux positions de commutation dans lesquelles l'élément de commutation (21) est maintenu par une force de maintien qui peut être appliquée par le dispositif d'actionnement (22), **caractérisée en ce que** le dispositif d'actionnement (22) comporte au moins deux unités d'entraînement (44, 45) actionnables de manière active, qui peuvent commuter chacune entre plusieurs états de fonctionnement et dont une première unité d'entraînement (44) est responsable de manière déterminante de la production de la force de maintien dans les deux positions de commutation, et une deuxième unité d'entraînement (45) est responsable de manière déterminante de la génération de la force de commutation, la première unité d'entraînement (44) dans un premier état de fonctionnement non activé appliquant, dans les deux positions de commutation, sans apport d'énergie supplémentaire de l'extérieur, la force de maintien qui agit sur l'élément de commutation (21), et dans un deuxième état de fonctionnement activé de l'extérieur par apport d'énergie, provoquant un état de commutation de l'élément de commutation (21) dans lequel la force de maintien est au moins en partie supprimée, et la deuxième unité d'entraînement (45) pouvant commuter d'un état initial à un état de fonctionnement de commutation dans lequel, à l'élément de commutation (21) se trouvant dans l'état de commutation, est appliquée une force de commutation qui agit dans le sens de commutation (24) souhaité et qui provoque une commutation dans le sens de la position de commutation souhaitée.

2. Soupape selon la revendication 1, **caractérisée en ce qu'**au moins une position de commutation constitue une position de fermeture, dans laquelle l'élément de commutation (21) ferme de manière étanche aux fluides un canal de fluide (3, 4) débouchant dans l'intérieur du boîtier de soupape (2).

3. Soupape selon la revendication 1 ou 2, **caractérisée en ce que** sont prévues seulement deux unités d'entraînement (44, 45) qui peuvent commuter en particulier chacune entre deux états de fonctionnement.

4. Soupape selon l'une des revendications 1 à 3, **caractérisée en ce que** la première unité d'entraînement (44) comporte au moins un actionneur (52) au moyen duquel on peut provoquer une force agissant sur l'élément de commutation (21).

5. Soupape selon l'une des revendications 1 à 4, **caractérisée en ce qu'**au moins une et en particulier la première unité d'entraînement (44) comporte un agencement de piézo-éléments (53) auquel une tension peut être appliquée et qui peut être séparé de cette tension, et qui, lorsqu'on applique la tension, se dilate dans un sens de déformation (54) et, lorsque l'on coupe la tension, se rétracte à nouveau, ou inversement, ce qui fait que par application et coupure de la tension, l'unité d'entraînement (44) peut commuter entre deux états de fonctionnement.

6. Soupape selon la revendication 5, **caractérisée en ce que** la première unité d'entraînement (44) se trouve dans le deuxième état de fonctionnement lorsque la tension est appliquée à l'agencement de piézo-éléments (53), et dans le premier état de fonctionnement, lorsque la tension est coupée.

7. Soupape selon la revendication 5 ou 6, en combinaison avec la revendication 4, **caractérisée en ce que** l'actionneur (52) est formé par l'agencement de piézo-éléments (53).

8. Soupape selon l'une des revendications 5 à 7, **caractérisée en ce que** l'agencement de piézo-éléments (53) comporte deux piézo-éléments (57, 58), en particulier de type parallélépipède ou plaque qui, dans le sens de déformation (54), s'étendent sensiblement parallèlement à l'élément de commutation (21) et des deux côtés de l'élément de commutation (21).

9. Soupape selon l'une des revendications 1 à 8, **caractérisée en ce que** l'élément de commutation (21) présente, dans les positions de commutation prédéfinies par l'action de la force de maintien, une forme bosselée ou bombée dans le sens du mouvement de commutation.

10. Soupape selon la revendication 9, **caractérisée en ce que** la distance entre les deux zones terminales (36, 37) de l'élément de commutation (21) peut être prédéfinie par la première unité d'entraînement (44).

11. Soupape selon la revendication 9 ou 10, **caractérisée en ce que** l'élément de commutation (21) est accouplé en mouvement, au moins par l'une de ses deux zones terminales (36, 37), avec la première unité d'entraînement (44).

12. Soupape selon l'une des revendications 1 à 11, **caractérisée en ce que** l'élément de commutation (21) a une forme de type baguette ou membrane et présente des propriétés élastiques en flexion, et subit une déformation élastique en flexion transversalement à la direction de son étendue, lors de la commutation entre les positions de commutation.

13. Soupape selon la revendication 12, **caractérisée en ce que** l'élément de commutation (21) comporte un corps de commutation (27) élastique en flexion dans le sens de la commutation (24), de type ressort à lame ou membrane, présentant une partie d'obturation (25).

14. Soupape selon la revendication 13, **caractérisée en ce que** la partie d'obturation (25) fait partie intégrante d'un seul tenant du corps de commutation (27).

15. Soupape selon l'une des revendications 1 à 14, **caractérisée en ce que** la première unité d'entraînement (44) comporte, pour appliquer la force de maintien, un dispositif (46) présentant l'élasticité d'un ressort, qui est formé en particulier par un dispositif à ressort, et de préférence ici, par un dispositif à ressort de compression (47).

16. Soupape selon la revendication 11 ou 12 en combinaison avec la revendication 13 ou 14, **caractérisée en ce que** le dispositif (46) présentant l'élasticité d'un ressort exerce sur l'élément de commutation (21) une pression transversalement au sens de commutation (24), de sorte qu'il se bombe dans le sens de commutation (24).

17. Soupape selon l'une des revendications 1 à 16, **caractérisée en ce qu'**une unité d'entraînement (44, 45) et en particulier la deuxième unité d'entraînement (45) coopère sans contact avec l'élément de commutation (21).

18. Soupape selon l'une des revendications 1 à 17, **caractérisée en ce qu'**au moins l'unité d'entraînement (44, 45) et en particulier la deuxième unité d'entraînement (45) est formée par un dispositif d'entraînement magnétique (89) qui comporte un agencement d'aimants (90), lequel provoque un champ magnétique qui sert à produire une force agissant sur l'élément de commutation (21).

19. Soupape selon la revendication 18, **caractérisée en ce que** l'agencement d'aimants (90) est formé par un agencement d'électro-aimants (91) commandable dont le champ magnétique coopère avec l'élément de commutation (21), de manière à pouvoir provoquer une force agissant sur l'élément de commutation (21).

20. Soupape selon la revendication 18, **caractérisée en ce que** dans le champ magnétique produit par l'agencement d'aimants (90) se trouve au moins un conducteur électrique (97) qui peut être parcouru par un courant et qui s'étend au moins par endroits transversalement aux lignes du champ magnétique et coopère avec l'élément de commutation (21) de manière qu'à l'état parcouru par un courant, une force dirigée dans le sens de commutation (24) s'exerce sur l'élément de commutation (21).

21. Soupape selon la revendication 20, en combinaison avec l'une des revendications 5 à 8, **caractérisée en ce que** l'énergie électrique, accumulée dans l'agencement de piézo-éléments (53), peut être dérivée dans le conducteur électrique (97), de sorte que dans le conducteur (97) circule un courant servant à produire la force de Lorentz agissant en tant que force de commutation.

22. Soupape selon la revendication 20 ou 21, **caractérisée en ce que** l'agencement d'aimants (90) est formé par un agencement d'aimants permanents (96) qui contient deux aimants permanents (99, 100) en particulier de type plaque, qui longent l'élément de commutation (21) sur des côtés opposés, ce qui fait que les lignes du champ magnétique s'étendent transversalement au sens de commutation (24).

23. Soupape selon l'une des revendications 20 à 22, **caractérisée en ce que** le ou les conducteurs (97) sont disposés sur l'élément de commutation (21) ou sont formés par au moins une partie conductrice de l'élément de commutation (21).

24. Soupape selon l'une des revendications 1 à 23, **caractérisée en ce que** l'élément de commutation (21), se trouvant à l'état de commutation, se place dans une position intermédiaire entre deux positions de commutation.

25. Soupape selon la revendication 24, **caractérisée en ce que** l'élément de commutation (21) en position intermédiaire a parcouru approximativement la moitié de la distance de commutation.

26. Soupape selon l'une des revendications 1 à 25, **caractérisée par** une construction micro-technologique.

27. Soupape selon l'une des revendications 1 à 26, **caractérisée en ce qu'**il s'agit d'une soupape à 3/2 voies.
